# EUROPEAN PATENT SPECIFICATION

(11) **EP 2 756 646 B1**
(45) Date of publication and mention of the grant of the patent: **30.03.2016**
(21) Application number: 12748437.6
(22) Date of filing: 16.08.2012
(51) Int. Cl.: H04L 25/49

(54) **BINARY DATA FRAME TRANSMISSION AND RECEPTION USING AN ADAPTIVE PULSE WIDTH MODULATION**
ÜBERTRAGUNG BINÄRER DATEN UNTER VERWENDUNG EINER ADAPTIVEN PULSLÄNGENMODULATION
TRANSMISSION ET RECEPTION D'UNE TRAME DE DONNÉES BINAIRES EN UTILISANT UNE MODULATION À LARGEURS D'IMPULSIONS ADAPTIVE

(30) Priority: 16.09.2011 EP 11306158
(43) Date of publication of application: 23.07.2014
(73) Proprietor: Gemalto SA, 92190 Meudon (FR)
(72) Inventor: MARSEILLE, François-Xavier, F-92190 Meudon (FR); DURAND, Stéphane, F-92190 Meudon (FR)
(74) Representative: Cassagne, Philippe M.J.
(86) International application number: PCT/EP2012/066019
(87) International publication number: WO 2013/037599

(56) References cited:
- US-A- 4 817 115
- US-A1- 2002 084 841
- US-A1- 2006 140 114

## Description

This invention relates to the area of data transmission between two remote pieces of equipment, and particularly the transmission of binary data using pulse width modulation.

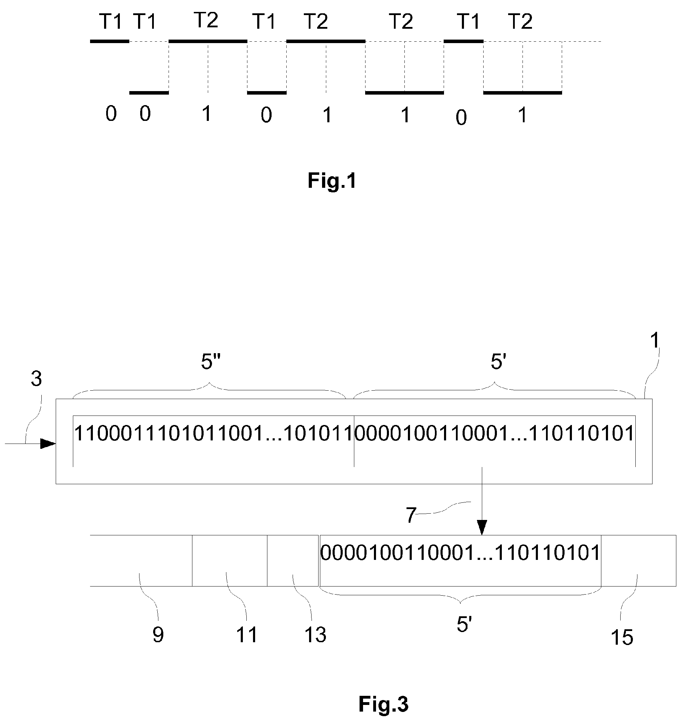

Pulse width modulation consists in encoding the logical status 0 by a pulse with a first width (or duration) T1 and encoding the logical status 1 by a pulse with a second width (or duration) T2 as described in figure 1.

However, in order to properly differentiate between the two logical statuses and do away with noise problems that can occur during transmission, the difference between the two widths (or durations) must be significant, e.g. T1 is a duration T and T2 is a duration 2T.

Such a technique is known from the patent application US4817115A.

But large pulse widths lead to longer transmission times and thus reduce the transmission speed.

There is thus a need to offer a method that minimises data transmission time in order to improve the overall data transmission speed.

Thus, this invention relates to a method for transmitting a binary data frame comprising two logical statuses between a first and at least a second piece of communication equipment in which the two logical statuses are encoded by a first and a second distinct pulse widths according to independent claim 1.

Additional details of said method are provided in dependent claims 1-7.

Another embodiment of present invention relates to a transmission device according to independent claim 8.

In addition, the present invention relates to a piece of communication equipment as defined in independent claim 9.

Other characteristics and advantages of the invention will appear in the description below, by reference to the attached drawings, which illustrate a possible embodiment, for information and in a non-limitative manner.

The present invention is defined and limited only by the scope of appended claims 1-9.

In these drawings:
- figure 1 represents an example of pulse-width modulation for a sequence of binary data;
- figure 2 represents a synoptic chart of the different stages of an embodiment of this invention;
- figure 3 represents a diagram of the buffer memory and the encapsulation of the data to transmit and their encapsulation in a frame comprising structural fields;

In the description below, the following are generally designated:
The embodiments of this invention relate to a method of transmission of a binary data frame based on pulse-width modulation as well as a corresponding device, where the convention for the modulation of the logical statuses is adapted on the basis of the data in the frame to transmit.

Thus, out of two distinct pulse widths, the smaller pulse width is allocated to the logical status where the number of occurrences in the data frame is larger. As a result, the larger pulse width is allocated to the logical status with a smaller number of occurrences.

Besides, if the number of occurrences of the two logical statuses is the same within a frame, the convention can then be selected randomly since the transmission time will be the same regardless of the convention selected.

Such a method is particularly well suited to the transmission of data between a first and at least a second piece of communication equipment comprising, for example, a transceiver, that is to say the combination of transmission equipment and reception equipment.

For the purpose of simplification, in the description below, the embodiments described will be limited to communication between a first and a second piece of communication equipment.

Further, the embodiments of this invention can adapt perfectly to transmission managed by a high-speed single-line protocol that allows virtually simultaneous bidirectional transmission (full duplex transmission) in which a single transmission channel is used to transmit in both directions.

In these transmissions, multiplexing may be time-division multiplexing, that is to say that the data are sent alternately from a first to a second piece of communication equipment and from the second to the first piece of communication equipment, alternating, for example, with each bit or each frame.

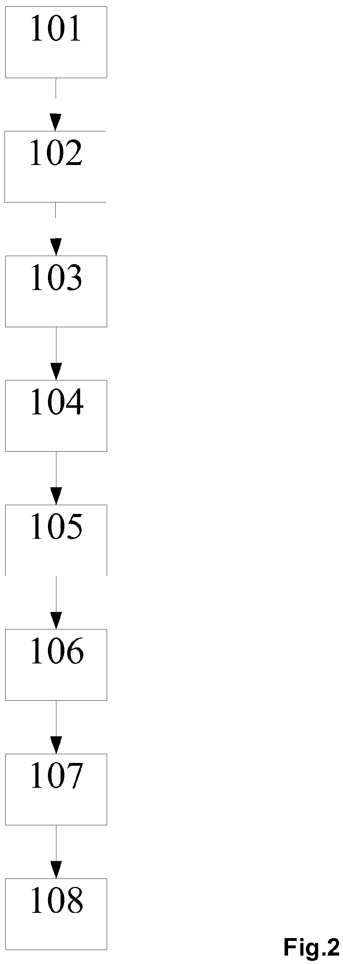

The different stages of the method will now be described in detail by reference to figure 2.

The first stage 101 is that of the buffering of the data in the frame to transmit in a first piece of communication equipment, comprising for example a transceiver. Indeed, in order to be able to count the number of occurrences of at least one logical status (the number of occurrences of the second logical status can be deducted if the size of a frame is known) within the frame, the frame must necessarily be buffered entirely.

Figure 3 represents an example of a buffer memory 1 comprising one input 3 at which the data frames 5 are received.

Stage 102 is that of the counting of the number of occurrences of the logical status (0 or 1) in a binary data frame by counting means, such as for example a counter that scans the data in the buffer memory and determines the number of occurrences of the logical statuses.

Such counting is carried out in the buffer memory 1. However, the time required for counting is not negligible, and can slow down the transmission of data. In order to reduce that latency time, in one embodiment of this invention, the capacity of the buffer memory 1 is at least two frames, represented here by frames 5' and 5". This may also be referred to as a sequence of buffer memories. Thus, counting on one of the frames 5" is carried out while previous frame 5' is being encoded and sent, which makes it possible to use the latency time due to counting.

Further, in order to reduce the time required for counting, counting may be carried out in parallel, simultaneously in several distinct sectors of the frame, the sum of the different sectors forming the complete frame, for example by using several counters that carry out counting in a given sector. A sector may for example be a group of 8 bits. Thus, the numbers of occurrences of each sector only need to be added together to identify the total number of occurrences of one of the logical statuses.

Once counting is completed, the next stage 103 is that of the selection of the convention for modulation and the encoding of the convention in a dedicated field.

The choice of the convention depends on the result of counting. Thus, if the number of occurrences of a logical status, for example 0, is greater than that of the other status, that is 1, then the selected convention will be that of modulating (or encoding) 0s by the smaller pulse width T1 and modulating Is by the larger pulse width T2.

Once the choice of the convention is made, that choice of convention is encoded in a dedicated field by encoding means so as to inform the receiver of the logical status represented by each pulse width T1 and T2.

Thus, at the output 7 of the buffer memory, structural fields of the frame are added to the data from the buffer memory 1. These structural fields comprise for example a preamble 9, a start-of-frame indicator 11 and an end-of-frame indicator 15. In order to indicate the selected convention to the receiver, a field dedicated to the selected modulation convention 13 is added, comprising an indicator of the convention selected. That dedicated field 13 may be located just after the start-of frame indicator 11 and just before the data of the frame 5'.

Thus, the indicator of the selected convention may for example be a bit and indicate the convention selected for pulse-width modulation. In practice, the encoding of the convention may for example be to encode 0s by pulses with the smaller width T1 if the bit of the indicator of the selected convention is 0 and encoding 1s by pulses with the smaller width T1 if the bit of the indicator of the selected convention is 1.

Besides, if a transmitter does not comprise means to count the number of occurrences of logical statuses, it may select a modulation convention randomly and indicate the selected convention in the dedicated field so that the signal can be demodulated by the receiver even if the transmitter does not have the means to count the number of occurrences of the logical statuses in a frame.

The next stage 104 is that of modulating the signal in pulse widths according to the selected convention by means for pulse-width modulation such as a modulator.

Stage 105 is that of sending the pulse-width modulated signal using transmission means from a first piece of communication equipment to a second piece of communication equipment. As described above, the signal may be sent in a single block of data or in several blocks so as to allow the virtually simultaneous transmission, on an alternating basis in the opposite direction, in the case of single-line time-division multiplexing.

Stage 106 is the reception of the pulse-width modulated signal by the second piece of communication equipment, using reception means.

Stage 107 is that of decoding, using decoding means, the field dedicated to the selected modulation convention. Thus, depending on the selected convention, the receiver can configure demodulation means so as to retrieve the logical statuses encoded by the first piece of communication equipment depending on the pulse widths.

In practice, depending on the value of the indicator of the selected convention, the position of a selector with two positions is adjusted, one indicating decoding where the smaller pulse widths represent 0s and the other indicating decoding where the larger pulse widths represents Is.

The last stage 108 is that of demodulating the signal received, using demodulation means such as for example a demodulator, on the basis of the value of the indicator of the selected convention, in order to retrieve the binary data transmitted.

Thus, the determination of the number of occurrences of logical statuses in a binary data frame and the adaptation of the pulse-width modulation convention depending on the number of occurrences of the logical statuses so as to encode the logical status with the larger number of occurrences by the smaller pulse width makes it possible to minimise the duration of the frame to transmit so as to improve the transmission speed. Further, such speed improvement is achieved by simple modifications of the transmission and reception equipment and thus requires low investment for implementation.

## Claims

1. A method for transmitting a binary data frame comprising two logical statuses between a first and at least a second piece of communication equipment , wherein said two logical statuses are encoded by a first and a second distinct pulse widths , said method comprising a step where:
- the number of occurrences of each logical status within the binary data frame is determined (102), said method being **characterized by** a step where
- the binary data frame is pulse-width modulated so that the smaller pulse width of said distinct first and second pulse widths is assigned to the logical status with the larger number of occurrences within the binary data frame (104).

2. A transmission method according to claim 1 in which said binary data are transmitted via a high-speed single-line protocol.

3. A transmission method according to claim 2 in which data transmission is bidirectional and alternating.

4. A transmission method according to claim 1, in which information indicating the convention selected for encoding the logical statuses is encoded in a dedicated location (13) of the transmitted binary data frame (103).

5. A transmission method according to claim 4, in which the binary data frame includes a start-of-frame pattern (11) and in which the dedicated location (13) is a bit located just after the start-of-frame pattern (11).

6. A transmission method according to claim 1 in which the binary data of the frame go through a buffer memory (1) before they are transmitted, and the number of occurrences of at least one of the logical statuses is counted (102) in the buffer memory (1).

7. A transmission method according to claim 6 in which the counting of the at least one of the logical statuses is carried out in parallel in different distinct areas of the buffer memory so as to reduce the counting time.

8. A transmission device comprising
- means configured to determine the number of occurrences of each logical status in a binary data frame to be transmitted, said transmission device being **characterized by**:
- pulse-width modulation means configured to assign, to a first and a second logical status respectively of the binary data of the frame to be transmitted, one of a first and a second distinct pulse widths, wherein the smaller pulse width of said distinct first and second pulse widths is assigned to the logical status with the larger number of occurrences in the binary data frame,
- means configured to encode, in a dedicated location of the binary data frame, the selected convention indicating which of said first and second pulse widths is assigned to each one of said first and second logical statuses, and
- means configured to transmit said binary data frame to at least one reception device.

9. A piece of communication equipment comprising at least one transmission device according to claim 8 and :
- means configured to receive said binary data frame transmitted by said at least one transmission device,
- information decoding means configured to decode an indication of the convention used by said at least one transmission device and indicating which of said first and second pulse widths is assigned to each one of said first and second logical statuses, said convention indication being located in a dedicated location of the received binary data frame, and
- frame data demodulation means configured to demodulate the binary data of said received binary data frame according to the used convention indicated by said decoded indication.

## Patentansprüche

1. Eine Methode für die Übertragung eines binären Daten-Frames einschließlich zweier logischer Zustände zwischen einem ersten und schließlich einem zweiten Teil einer Kommunikationsausrüstung, in welcher die besagten zwei logischen Zustände durch eine erste und eine zweite eigenständige Pulsweite codiert sind, zu der besagten Methode gehört ein Schritt, bei dem:
- die Zahl des Vorkommens jedes logischen Zustandes innerhalb des binären Daten-Frames wird bestimmt (102), zur besagten Methode gehört ein Schritt, bei dem das binäre Daten-Frame in seiner Pulsweite moduliert wird, so dass die kleinere Pulsweite der besagten eigenständigen ersten und zweiten Pulsweiten diesem Zustand zugeordnet wird, mit einer größeren Zahl des Vorkommens innerhalb des binären Daten-Frames (104).

2. Eine Übertragungsmethode gemäß Patentanspruch 1, in dem die besagten binären Daten mit einem Highspeed-Protokoll für eine Einzelleitung übertragen werden.

3. Eine Übertragungsmethode gemäß Patentanspruch 2, in der die Datenübertragung bidirektional und alternierend ist.

4. Eine Übertragungsmethode gemäß Patentanspruch 1, in welcher Informationen an einer dafür vorgesehenen Position (13) des übertragenen binären Daten-Frames (103) codiert werden und die gewählte Konvention für die Codierung der logischen Zustände angeben.

5. Eine Übertragungsmethode gemäß Patentanspruch 4, in der das binäre Daten-Frame ein Start-of-Frame Muster (11) enthält und in der die vorgesehene Position (13) ein Bit ist, das sich direkt hinter dem Start-of-Frame Muster (11) befindet.

6. Eine Übertragungsmethode gemäß Patentanspruch 1, in der die binären Daten des Frame durch einen Pufferspeicher (1) laufen, bevor sie übertragen werden, und die Zahl des Vorkommens von mindestens einem der logischen Zustände im Pufferspeicher (1) gezählt wird (102).

7. Eine Übertragungsmethode gemäß Patentanspruch 6 in der die Zählung der logischen Zustände, von denen es zumindest einen gibt, parallel zueinander in verschiedenen Bereichen des Pufferspeichers erfolgt, um die Zähldauer zu verkürzen.

8. Ein Übertragungsgerät einschließlich
- Vorrichtungen, die so konfiguriert sind, dass die Zahl des Vorkommens der einzelnen logischen Zustände in einem zu übertragenden binären Daten-Frame bestimmt wird, das besagte Übertragungsgerät ist **gekennzeichnet durch**:
- Vorrichtungen zur Pulsweitenmodulation, die so konfiguriert sind, dass sie von einer ersten und einer zweiten eigenständigen Pulsweite eine zu jeweils einem ersten und einem zweiten logischen Zustand der binären Daten des zu übertragenden Frames zuweisen, wobei die kleinere Pulsweite der besagten eigenständigen ersten und zweiten Pulsweiten in dem binären Daten-Frame dem logischen Zustand zugewiesen wird, bei dem die Zahl des Vorkommens größer ist,
- Vorrichtungen konfiguriert für die Codierung der gewählten Konvention an einer dafür vorgesehenen Position des binären Daten-Frames, mit der Angabe, welche der besagten ersten und zweiten Pulsweiten zu jedem der besagten ersten und zweiten logischen Zustände zugewiesen wird, und
- Vorrichtungen konfiguriert zur Übertragung des besagten binären Daten-Frames zu mindestens einem Empfangsgerät.

9. Ein Teil der Kommunikationsausrüstung einschließlich mindestens eines Übertragungsgeräts gemäß Patentanspruch 8 und:
- Vorrichtungen konfiguriert zum Empfang des besagten von mindestens einem Übertragungsgerät gesendeten binären Daten-Frames,
- Vorrichtungen zur Decodierung von Informationen konfiguriert zur Decodierung der Angabe der Konvention, die vom besagten und mindestens einem Übertragungsgerät verwendet wird und angibt, welche der besagten ersten und zweiten Pulsweiten jedem der besagten ersten und zweiten logischen Zustände zugewiesen wird, wobei sich die besagte Angabe der Konvention an der dafür vorgesehenen Position des binären Daten-Frames befindet, und Vorrichtungen zur Demodulierung der Frame-Daten, konfiguriert zur Demodulierung der Binärdaten des besagten empfangenen Daten-Frames gemäß der verwendeten Konvention, die durch die besagte decodierte Angabe benannt wird.

## Revendications

1. Procédé visant à transmettre une trame de données binaires comprenant deux états logiques entre une première et au moins une seconde pièce d'équipement de communication, dans lequel lesdits deux états logiques sont codés par une première et une seconde largeurs d'impulsion distinctes, ledit procédé comprenant une étape dans laquelle :
- le nombre d'occurrences de chaque état logique dans la trame de données binaires est déterminé (102), ledit procédé étant **caractérisé par** une étape dans laquelle la trame de données binaires est modulée par une largeur d'impulsion de sorte que la largeur d'impulsion la plus petite desdites première et seconde largeurs d'impulsion distinctes soit attribuée à l'état logique ayant le plus grand nombre d'occurrences dans la trame de données binaires (104).

2. Procédé de transmission selon la revendication 1, dans lequel lesdites données binaires sont transmises par le biais d'un protocole uniligne à grande vitesse.

3. Procédé de transmission selon la revendication 2, dans lequel la transmission des données est bidirectionnelle et alternée.

4. Procédé de transmission selon la revendication 1, dans lequel les informations indiquant la convention choisie pour coder les états logiques sont codées dans un emplacement dédié (13) de la trame de données binaires transmise (103).

5. Procédé de transmission selon la revendication 4, dans lequel la trame de données binaires comprend un modèle de début de trame (11) et dans lequel l'emplacement dédié (13) est un bit situé juste après le modèle de début de trame (11).

6. Procédé de transmission selon la revendication 1, dans lequel les données binaires de la trame passent à travers une mémoire tampon (1) avant qu'elles ne soient transmises, et le nombre d'occurrences d'au moins un des états logiques est compté (102) dans la mémoire tampon (1).

7. Procédé de transmission selon la revendication 6, dans lequel le décompte dudit au moins un des états logiques est effectué en parallèle dans différentes zones distinctes de la mémoire tampon de façon à réduire le temps de décompte.

8. Dispositif de transmission comprenant
- des moyens configurés pour déterminer le nombre d'occurrences de chaque état logique dans une trame de données binaires à transmettre, ledit dispositif de transmission étant **caractérisé par** :
- des moyens de modulation de largeur d'impulsion configurés pour attribuer à un premier et à un second états logiques respectivement des données binaires de la trame à transmettre, une parmi une première et une seconde largeurs d'impulsion distinctes, dans lequel la plus petite largeur d'impulsion desdites première et seconde largeurs d'impulsion distinctes est attribuée à l'état logique ayant le plus grand nombre d'occurrences dans la trame de données binaires,
- des moyens configurés pour coder, dans un emplacement dédié de la trame de données binaires, la convention sélectionnée indiquant laquelle desdites première et seconde largeurs d'impulsion est attribuée à chacun desdits premier et second états, et
- des moyens configurés pour transmettre ladite trame de données binaires à au moins un dispositif de réception.

9. Pièce d'équipement de communication comprenant au moins un dispositif de transmission selon la revendication 8 et :
- des moyens configurés pour recevoir ladite trame de données binaires transmise par ledit au moins un dispositif de transmission,
- des moyens de décodage des informations, configurés pour décoder une indication de la convention utilisée par ledit au moins un dispositif de transmission et indiquant laquelle desdites première et seconde largeurs d'impulsion est attribuée à chacun desdits premier et second états logiques, ladite indication de convention étant située dans un emplacement dédié de la trame de données binaires reçue, et des moyens de démodulation de données de la trame, configurés pour démoduler les données binaires de ladite trame de données binaires reçue, selon la convention utilisée indiquée par ladite indication décodée.
